# EUROPEAN PATENT APPLICATION

(11) **EP 0 794 068 A1**
(43) Date of publication of application: **10.09.1997**
(21) Application number: 96200599.7
(22) Date of filing: 09.03.1996
(51) Int. Cl.: B41M 5/38, C09B 56/02

(54) **Dyes and dye-donor elements for thermal dye transfer recording**

(71) Applicant: AGFA-GEVAERT naamloze vennootschap, 2640 Mortsel (BE)
(72) Inventor: Vanmaele, Luc, 2640 Mortsel (BE)

(57) **Abstract**

The present invention discloses a dye-donor element for use according to thermal dye sublimation transfer, said dye-donor element comprising a support having thereon a dye layer comprising a binder, preferably polymeric, and at least one dye, wherein said at least one dye corresponds to the following general formula (I) : 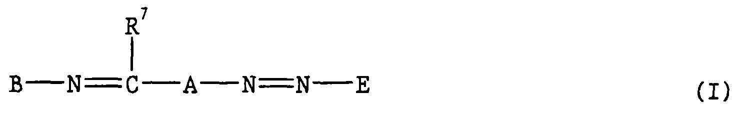 wherein :
A and B independently represent a heterocyclic ring;
E represents the residue of an aromatic coupling compound E-Q wherein Q is a group displaceable by a diazotised amine;
R⁷ represents hydrogen, an alkyl group, an alkenyl group, an alkynyl group, an aryl group, an aryloxy group, an alkoxy group, an alkylthio group, an amino group or an electron withdrawing group.

## Description

### 1. Field of the invention.

The present invention relates to dye-donor elements for use in thermal dye transfer methods, in particular thermal dye sublimation transfer or thermal dye diffusion transfer and to novel light fast dyes for use in said dye-donor elements.

### 2. Background of the invention.

Thermal dye sublimation transfer or thermal dye diffusion transfer is a recording method in which a dye-donor element provided with a dye layer containing sublimable dyes having heat transferability is brought into contact with a receiver sheet or receiver element and selectively, in accordance with a pattern information signal, is heated by means of a thermal printing head provided with a plurality of juxtaposed heat-generating resistors, whereby dye is transferred from the selectively heated regions of the dye-donor element to the receiver sheet and forms a pattern thereon, the shape and density of which are in accordance with the pattern and intensity of heat applied to the dye-donor element.

A dye-donor element for use according to thermal dye sublimation transfer usually comprises a very thin support e.g. a polyester support, one side of which is covered with a dye layer comprising the printing dyes. Usually, an adhesive or subbing layer is provided between the support and the dye layer. Normally, the opposite side is covered with a slipping layer that provides a lubricated surface against which the thermal printing head can pass without suffering abrasion. An adhesive layer may be provided between the support and the slipping layer.

The dye layer can be a monochromic dye layer or it may comprise sequential repeating areas of differently coloured dyes e.g. dyes having a cyan, magenta, yellow, and optionally black hue. When a dye-donor element containing three or more primary colour dyes is used, a multicolour image can be obtained by sequentially performing the dye transfer process steps for each colour.

A primary coloured dye layer e.g. a magenta or cyan or yellow dye layer may comprise only one primary coloured dye (a magenta, cyan or yellow dye respectively) or may comprise a mixture of two or more primary colour dyes of the same hue (two magenta, two cyan or two yellow dyes respectively).

Any dye can be used in such a dye layer provided it is easily transferable to the dye-image-receiving layer of the receiver sheet or element by the action of heat.

Typical and specific examples of dyes for use in thermal dye sublimation transfer have been described in e.g. EP 209,990, EP 209,991, EP 216,483, EP 218,397, EP 227,095, EP 227,096, EP 229,374, EP 235,939, EP 247,737, EP 257,577, EP 257,580, EP 258,856, EP 400,706,EP 279,330, EP 279,467, EP 285,665, US 4,743,582, US 4,753,922, US 4,753,923, US 4,757,046, US 4,769,360, US 4,771,035, US 5,026,677, JP 84/78,894, JP 84/78,895, JP 84/78,896, JP 84/227,490, JP 84/227,948, JP 85/27,594, JP 85/30,391, JP 85/229,787, JP 85/229,789, JP 85/229,790, JP 85/229,791, JP 85/229,792, JP 85/229,793, JP 85/229,795, JP 86/41,596, JP 86/268,493, JP 86/268,494, JP 86/268,495, and JP 86/284,489.

The so-called additive colors green, red and blue in the obtained prints are realised by printing sequentially the primary colors on each other : thus a green color on the print is obtained by printing sequentially cyan and yellow colored dyes, blue by printing sequentially cyan and magenta colored dyes. So in fact these shades consist of mixtures of dyes.

Dye images containing mixtures of dyes frequently show an increased fading rate due to a photochemical effect, known as catalytic fading of dye mixtures.

This phenomenon was investigated in textile dyeing by Rembold and Kramer (see Journal of the Society of Dyers and Colourists, vol. 94 (1978), pages 12-17) and by Asquith and Ingham (see Journal of the Society of Dyers and Colourists, vol. 89 (1973), pages 81-85). Catalytic fading is related to the observation that the lightfastness of certain dyes applied to textiles alone is much better than when applied as mixtures. In most reported cases, the lightfastness of cyan, violet or red dyes deteriorates when a yellow dye is added.

Indoaniline dyes have a favourable effect on catalytic fading especially in dye mixtures for obtaining black colored images. However there are still strong catalytic fading effects in the green colored images composed of yellow and cyan dyes, with cyan indoaniline dyes as well as with other cyan azomethine dyes. Moreover, many indoaniline dyes have poor light stability.

Dyes are generally unstable to light at least to some extent. Dyes are known to degrade through a number of pathways, which often involve dye triplet states radicals and/or singlet oxygen. Any improvement in the light stability of dyes is highly desirable therefore.

In photographic silver halide systems various light-stabilizers for dyes are known. For instance UV-absorbers are used frequently in a top layer to shield dyes from the harmful influence of ultraviolet radiation.

Unfortunately, such technique cannot be used in thermal transfer systems, because the dyes, after having been thermally transferred to a receiver sheet, are located in the very top layer of said receiver sheet. If in that case UV-absorbers would be present as well in said top layer, they would intimately mix with the transferred dyes and thus give rise to a so-called catalytic fading effect, which would degrade the dyes even faster.

For use in thermal transfer other types of light-stabilizers such as singlet oxygen quenchers and methal chelates have been described e.g. in EP 312,812. Although these compounds are known to constitute a class of effective stabilizers to light, their performance is not equally adequate for all types of dyes. But above all, the use of such light-stabilizers is undesirable because most of them comprise heavy metal ions, which nowadays raises increasing resistance for ecological reasons.

Furthermore, certain known light-stabilizers cause an undesirable stain in the receiver sheet.

In spite of the many dyes that already exist, there is still a continuous search for novel dyes and especially for dyes that are suited for use in dye-donor elements for thermal dye sublimation transfer printing, preferably dyes with low melting points, a good solubility in ecologically acceptable solvents and an excellent light stability.

### 3. Summary of the invention.

It is therefore an object of the present invention to provide dye-donor elements for use according to thermal dye sublimation transfer printing, yielding transferred dye images of high density showing no or decreased catalytic fading effects in the colored image areas.

It is another object of the present invention to provide cyan and infrared dyes with a very good lightfastness and that can be used in said dye-donor elements.

Other objects will become apparent from the description hereinafter.

In accordance with the present invention a dye-donor element for use according to thermal dye sublimation transfer is provided, said dye-donor element comprising a support having thereon a dye layer comprising a binder, preferably polymeric, and at least one dye, wherein said at least one dye corresponds to the following general formula (I) : 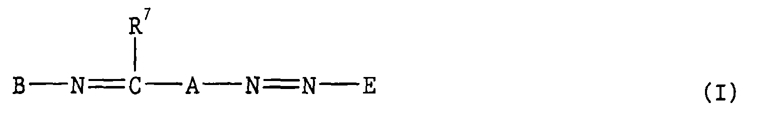 wherein :
A and B independently represent a heterocyclic ring;
E represents the residue of an aromatic coupling compound E-Q wherein Q is a group displaceable by a diazotised amine;
R⁷ represents hydrogen, an alkyl group, an alkenyl group, an alkynyl group, an aryl group, an aryloxy group, an alkoxy group, an alkylthio group, an amino group or an electron withdrawing group.

The present invention also provides cyan and infrared dyes corresponding to the above general formula I.

According to the present invention there is further provided a method for making an image according to the thermal dye transfer process comprising the steps of :
- placing the dye layer of a dye donor element as defined above in face-to-face relationship with a dye-image receiving layer of a receiver sheet;
- image-wise heating a thus obtained assemblage and
- separating said receiver sheet from said dye donor element.

### 4. Detailed description of the invention.

Examples of particular heterocyclic rings for use in accordance with this invention as A or B in formula(I)are a thiazole, thiophene, imidazole, benzimidazole, pyrazole, oxazole, furan, benzoisothiazole, pyridine, thiadiazole, triazole, quinoline, isoquinoline, isoxazole, benzoisoxazole, pyrrole, isothiadiazole, benzoxazole ring.

Examples of coupling compounds E-Q are 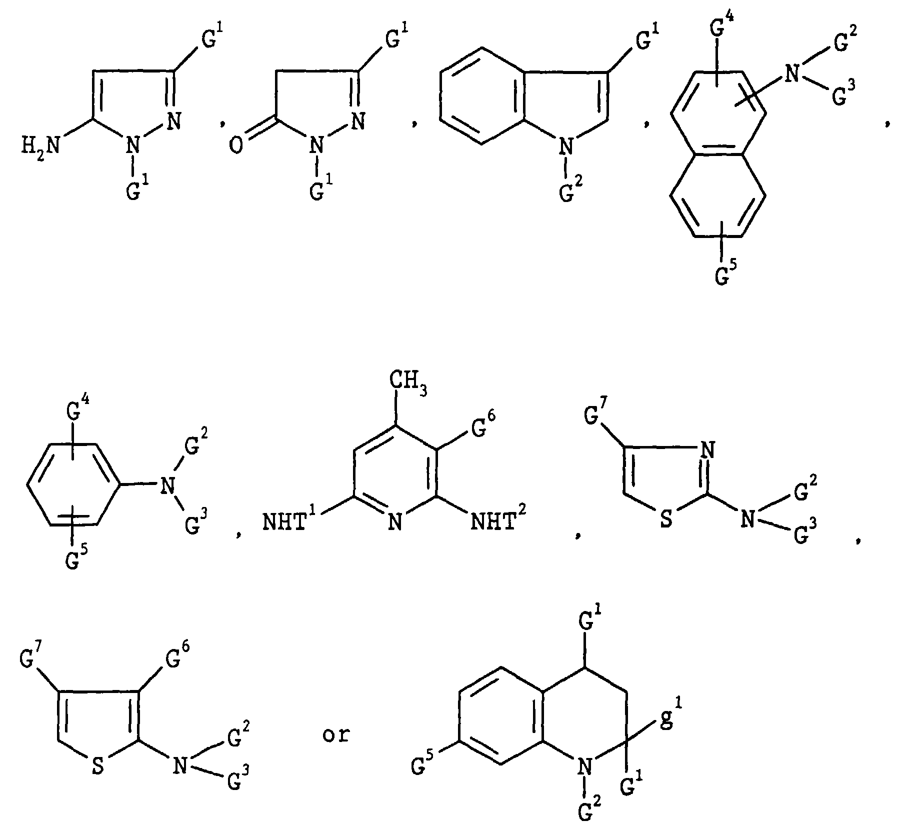 wherein :
T¹ represents hydrogen, an alkyl group, an alkenyl group, an alkynyl group, an aryl group or an acyl group;
T² represents an alkyl group, an alkenyl group, an alkynyl group, an aryl group or an acyl group;
G¹ and G² each independently represent hydrogen, an alkyl group, an alkenyl group, an alkynyl group or an aryl group;
G³ represents an alkyl group, an alkenyl group, an alkynyl group or an aryl group;
G⁴ and G⁵ each independently represent hydrogen, an alkyl group, an alkenyl group, an alkynyl group, an alkoxy group, an aryloxy group (e.g. a phenoxy), an alkylthio group, an arylthio group, halogen, an alkylsulfonylamino group, e.g. a dialkylaminosulfonylamino group, an arylsulfonylamino group, or an acylamino group;
G⁶ represents CN, a carbamoyl group, nitro, an acetyl group or an alkoxy group, an aryloxy group, an arylthio group or an alkylthio group and
G⁷ represents an aryl group, e.g. a phenyl, an alkyl group, an alkenyl group, an alkynyl group, halogen, an amino group, OH, SH, an alkylthio group, an alkoxy group, an aryloxy group or an arylthio group.

Examples of electron withdrawing groups for R⁷ are CN, a halogen, a carboxylic ester, an amide, e.g. a carboxylamide, a sulphonate, a sulphone, a phosphonate, a carbonyl group or a nitro group.

In a preferred embodiment of the invention, the dyes of the present invention correspond to the following general formula (II) 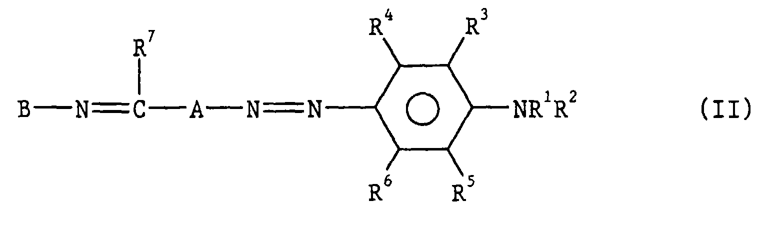 wherein A, B and R⁷ have the same meaning as defined in formula (I);
R¹ and R² each independently represent hydrogen, an alkyl group, an alkenyl group, alkynyl group, an aryl group, a heterocyclic group or R¹ and R² together with the nitrogen atom to which they are attached represent the atoms necessary to complete a ring;
R³, R⁴, R⁵ and R⁶ each independently represent hydrogen, an alkyl group, an alkenyl group, an alkynyl group, an aryl group, an alkoxy group, an alkylthio group, an arylthio group, an aryloxy group, a carbamoyl group, a sulfamoyl group, hydroxy, SH, an amino group, a halogen, NO₂, CN, NHSO₂R⁸, OSO₂R⁸, OCOR⁸, COR⁸, SO₂R⁸ or R⁵ and R⁶ together and/or R³ and R⁴ together with the atoms to which they are attached represent the necessary atoms to complete a ring or R⁵ and R¹ together with the atoms to which they are attached and/or R³ and R² together with the atoms to which they are attached represent the necessary atoms to form a heterocyclic ring;
R⁸ represents an alkyl group, an alkenyl group, an alkynyl group, an aryl group, an alkyloxy group, an aryloxy group, an alkylthio group, an arylthio group, an amino group or a heterocyclic group.

In a further preferred embodiment of the invention, the dyes of the present invention correspond to the following general formula(III) : 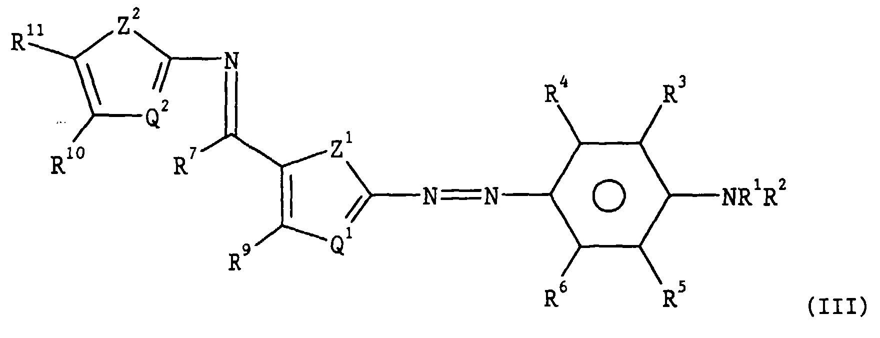 wherein R¹, R², R³, R⁴, R⁵, R⁶ and R⁷ have the same meaning as defined in formula (I);
Z¹ and Z² each independently represent O, S or NR¹² with R¹² representing hydrogen, an alkyl group, an alkenyl group, an alkynyl group or an aryl group;
Q¹ and Q² each independently represent N or CR¹³ with R¹³ representing hydrogen, an alkyl group, an alkenyl group, an alkynyl group, an aryl group, an alkoxy group, an alkylthio group, OH, CN, NO₂, SH, halogen, amino, COR¹⁴, SO₂R¹⁴, NHCOR¹⁴, NHSO₂R¹⁴, OCOR¹⁴ or OSO₂R¹⁴;
R¹⁴ represents an alkyl group, an alkenyl group, an alkynyl group, an aryl group, an alkyloxy group, an aryloxy group, an alkylthio group, an arylthio group, an amino group or a heterocyclic group;
R⁹ and R¹⁰ each independently represent hydrogen, halogen, CN, an alkyl or aryl group, an amino group, or W-R¹⁵; W represents O, S, or SO₂ and R¹⁵ represents hydrogen, an alkyl group, an aryl group, an alkenyl group, an alkynyl group or CN;
R¹¹ represents halogen, hydrogen, an alkyl group, an alkenyl group, an alkynyl group, an aryl group, an alkoxy group, an alkythio group, NO₂, CN or R¹⁶-C=X wherein R¹⁶ represents hydrogen, an alkyl group, an alkenyl group, an aryl group, an aryloxy group, an alkoxy group, an alkylthio group, an amino group or an electron withdrawing group as e.g. mentioned for R⁷;
X represents O, N-R¹⁷, CR¹⁸R¹⁹;
R¹⁷ represents H, CN, NR²⁰R²¹, OR²⁰, OCOOR²⁰, OCONR²⁰R²¹, OSO₂R²⁰, OPO(OR²⁰⁾(OR²¹) or a heterocyclic ring;
R¹⁸ and R¹⁹ each independently represents an electron withdrawing group e.g. as mentioned for R⁷ above, in particular CN, CO₂R²⁰, CONR²⁰R²¹, NO₂, COR²⁰, PO(OR²⁰)(OR²¹), SO₂R²⁰, SO₃R²⁰; or R¹⁸ and R¹⁹ together represent the atom necessary for completing a ring system;
R²⁰ and R²¹ each independently represents hydrogen, an alkyl group, an aryl group, an alkenyl group, an alkynyl group or R²⁰ and R²¹ together represent the atoms necessary for completing a heterocyclic nucleus.

A non-exhaustive list of dyes corresponding to the above general formula's is given in tables 1 and 2 hereinafter.

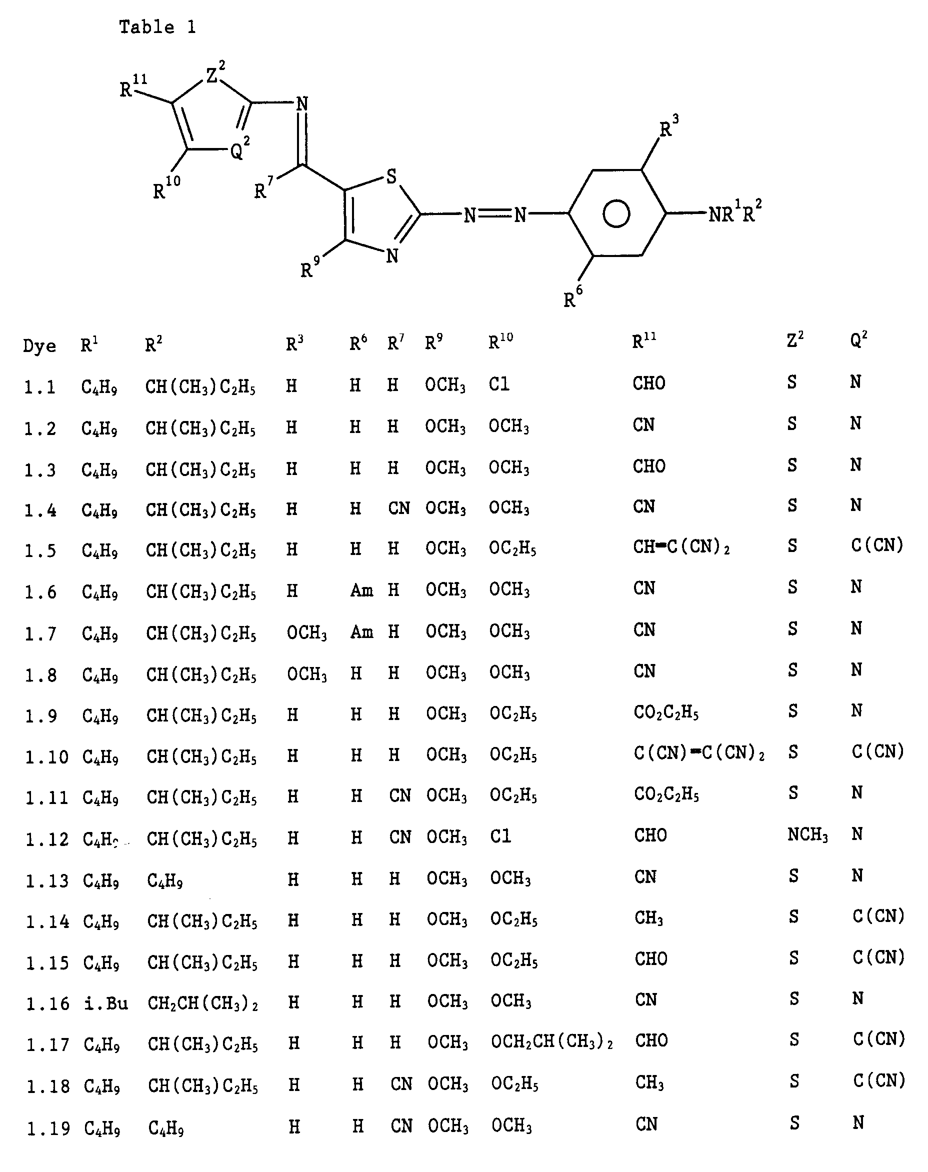

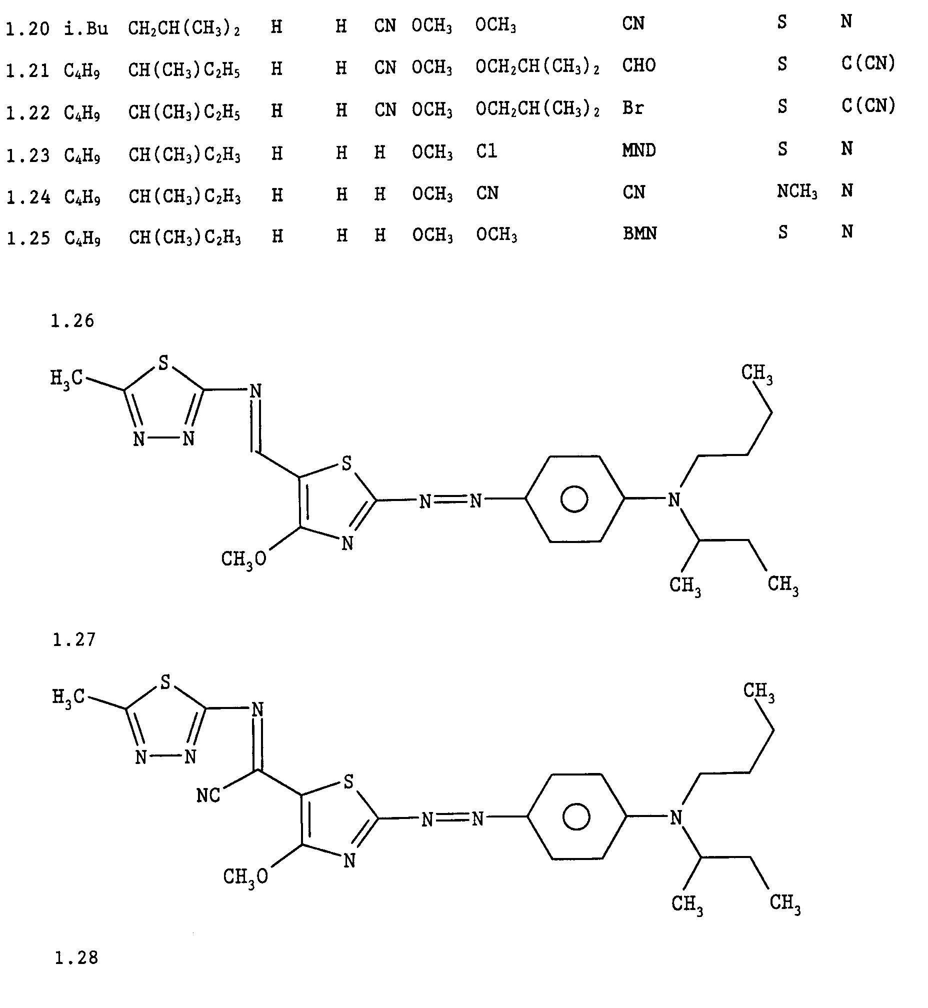

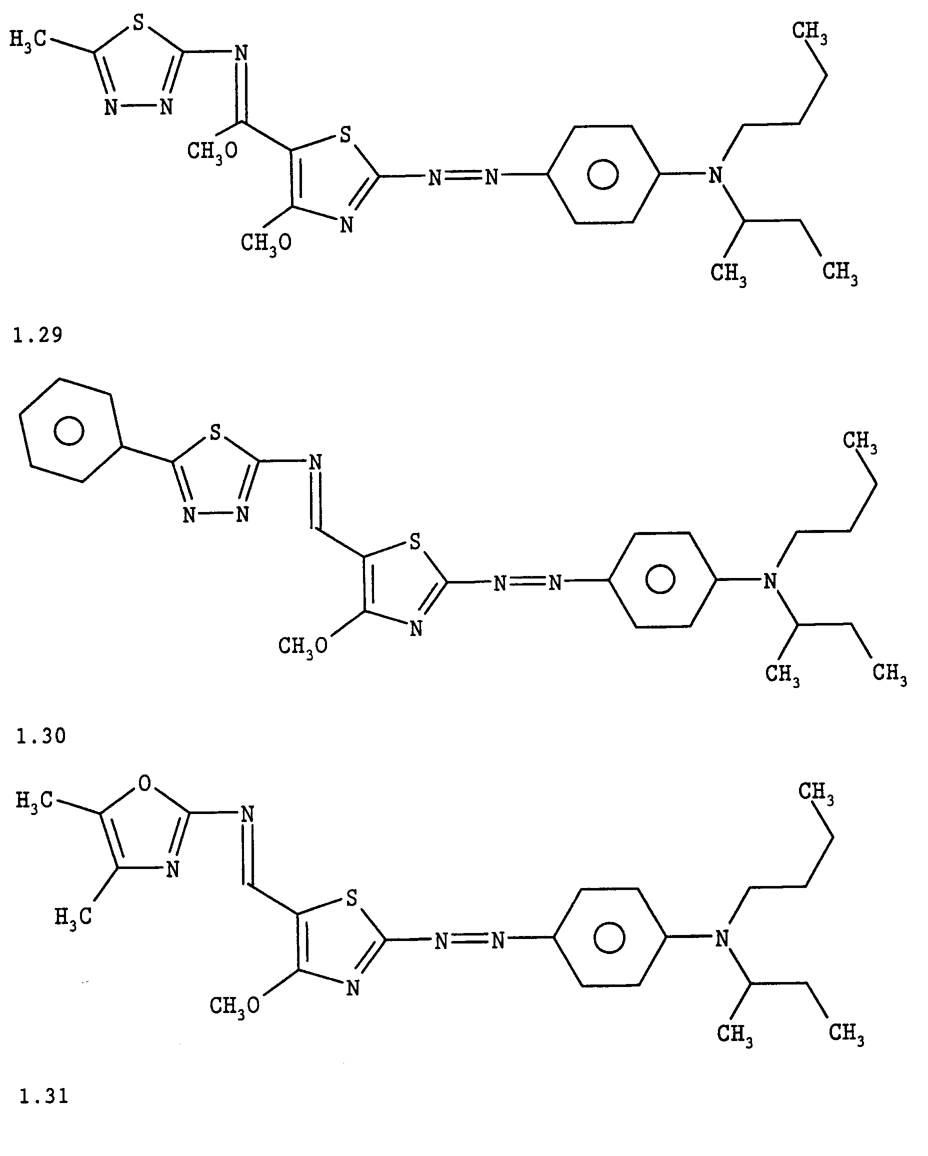

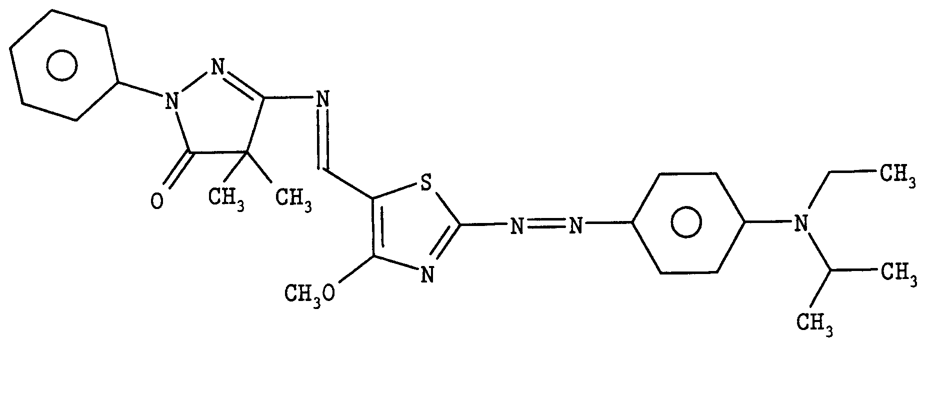

The symbols used in the above table have the following meaning:
i.Bu represents CH₂CH(CH₃)₂
Am represents NHCOCH₃

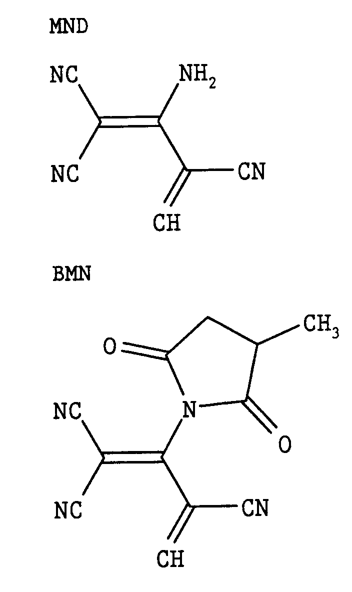

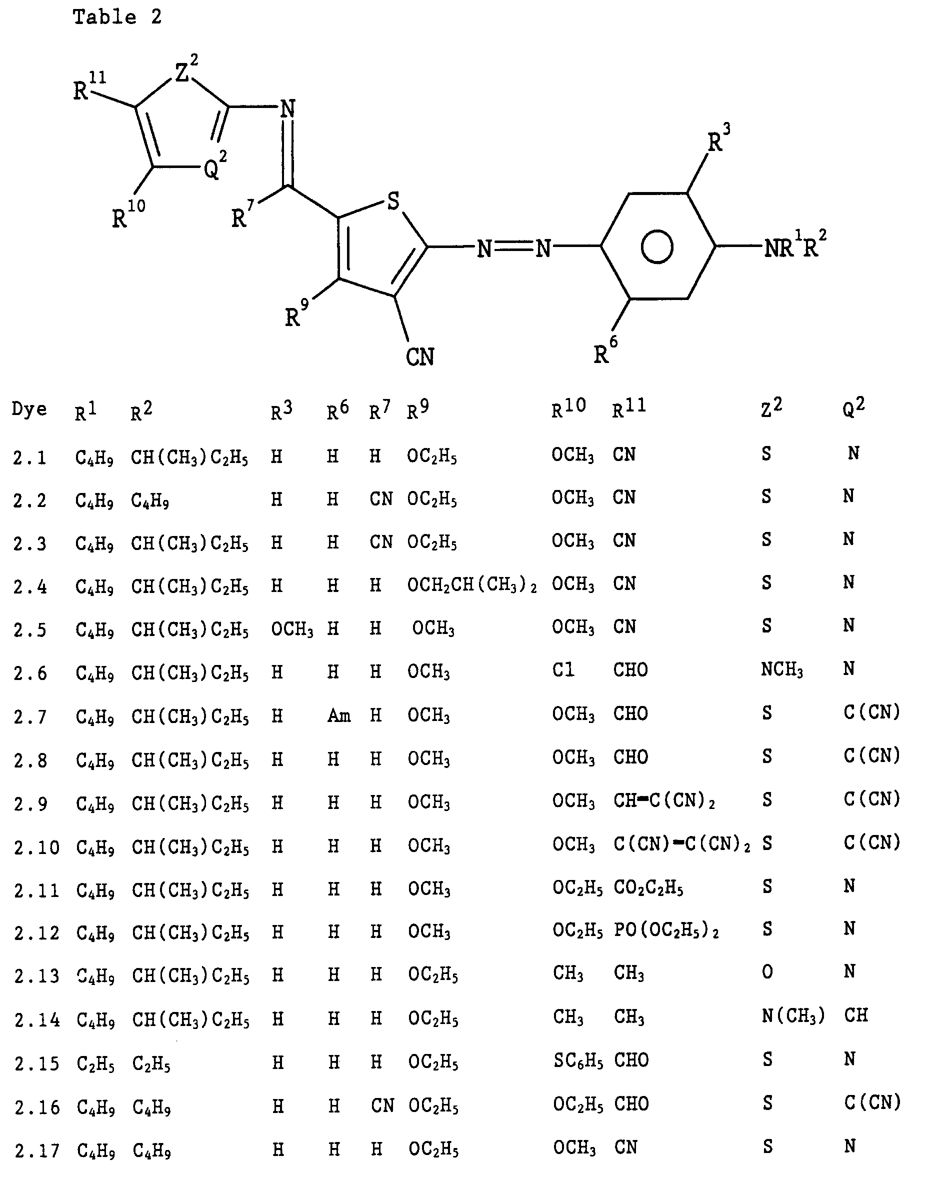

The dyes according to the invention can be prepared according to methods known to those who are skilled in the art of organic synthesis. By way of example one general synthetic scheme is given in scheme 1.

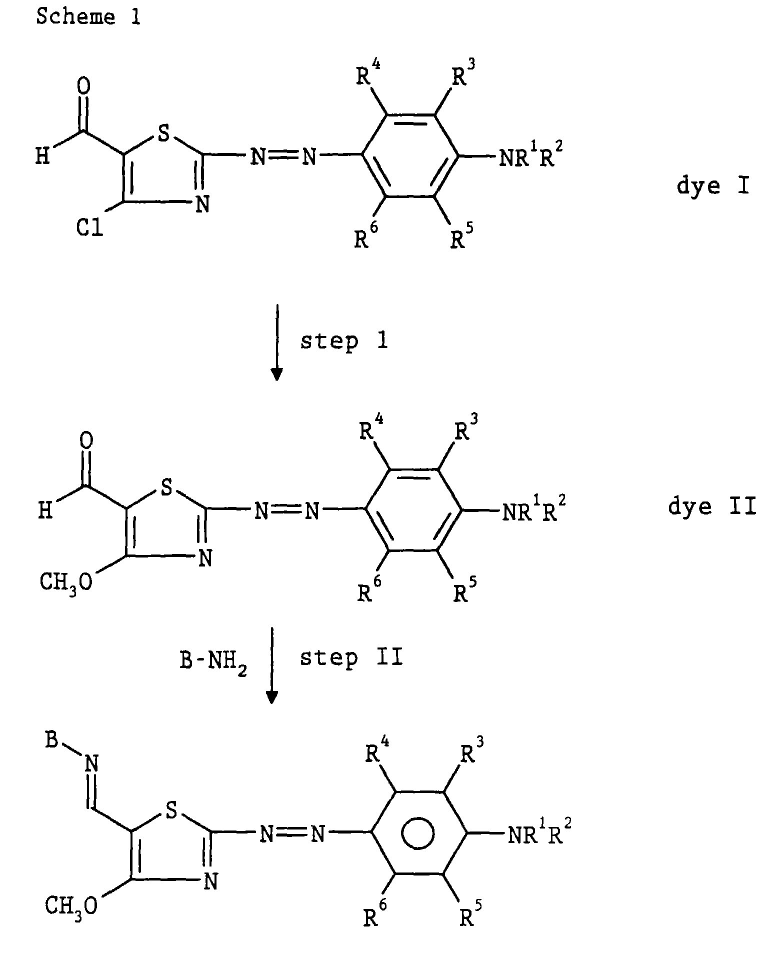

The synthesis of heterocyclic thiazole and thiophene azo dyes, e.g. dye I and dye II, is described in US 4,395,544, US 4,505,857, US 5,366,951 and EP 0 201 896. Heterocyclic amines B-NH₂ are commercially available or can be prepared according to literative procedures known to those who are skilled in the art of organic synthesis, e.g. EP 687 674 and references cited therein, and the Chemistry of Heterocyclic Compounds, a series of monographs, John Wiley & Sons. The imine formation (Step 2) proceeds according to general synthetic methods, such as azeotropic dehydration in toluene with a catalytic amount of p-toluenesulfonic acid.

The dyes can be used as filter dyes e.g. for silver halide colour photographic materials and also as antihalation dyes.

The dyes corresponding to the general formula (I) defined above can be used in inkjet printing, resistive ribbon printing, in inks e.g. for laser applications, in textile, in lacquers, and in paints.

They can also be used for transfer printing on fabrics and for constructing filter array elements. According to a preferred embodiment of the present invention the dyes are used in the dye layer of a dye-donor element for thermal dye sublimation transfer.

To improve the stability of the dyes to light, the use of a metal complex of the dye e.g. a Ni or Co complex is also effective.

The dye layer is formed preferably by adding the dye, a polymeric binder medium, and other optional components to a suitable solvent or solvent mixture, dissolving or dispersing the ingredients to form a coating composition that is applied to a support, which may have been provided first with an adhesive or subbing layer, and dried.

The dye layer thus formed has a thickness of about 2.0 to 5.0 µm, preferably 0.4 t 2.0 µm, and the amount ratio of dye to binder ranges from 9:1 to 1:3 by weight, preferably form 2:1 to 1:2 by weight.

As polymeric binder the following can be used : cellulose derrivatives, such as ethyl cellulose , hydroxyethyl cellulose, ethylhydrox cellulose, ehtylhydroxylethyl cellulose, hydroxypropyl cellulose, methyl cellulose, cellulose nitrate, cellulose acetate formate, cellulose acetate hydrogren phthalate, cellulose acetate, cellulose acetate proprionate, cellulose acetate butyrate, cellulose acetate pentanoate, cellulose acetate benzoate, cellulose triacetate; vinyl-type resins and derivatives, such as polyvinyl alcohol, polyvinyl acetate, polyvinyl butyral, copolyvinyl butyral-vinyl acetal-vinyl alcohol, polyvinyl pyrrolidone, polyvinyl acetoacetal, polyacrylamide; polymers and copolymers derived from acrylates and acrylate derivatives, such as polyacyrlic acid, polymethyl methacrylate and styrene-acrylate copolymers; polyester resins; polycarbonates; copolystyrene-acrylonitrilek; polysulfones; polyphenylene oxide; organosilicones, such as polysiloxanes; epoxy resins and natural resins, such as gum arabic. Preferably, the binder for the dye layer of the present invention comprises cellulose acetate butyrate of copolystyrene-acrylonitrile.

The dyes in accordance with the present invention may be used in admixture with other known dyes for thermal sublimation printing.

In particular they can be used in combination with tricyano- and dicyanovinyl dyes as disclosed in EP 671996, EP 594239 and with malononitrile dimer derived dyes as disclosed in EP-A-400706. The present dyes may also be used in admixture with azo dyes e.g. disperse azo dyes, anthraquinone dyes, indoaniline dyes, azomethine dyes. Examples of dyes that can be used in combination with the dyes of the present invention are disclosed in e.g. EP 92203979, EP 209,990, EP 209,991, EP 216,483, EP 218,397, EP 227,095, EP 227,096, EP 229,374, EP 235,939, EP 247,737, EP 257,577, EP 257,580, EP 258,856, EP 279,330, EP 279,467, EP 285,665, EP 400,706, US 4,743,582, US 4,753,922, US 4,753,923, US 4,757,046, US 4,769,360, US 4,771,035, US 5,026,677, JP 84/78,894, JP 84/78,895, JP 84/78,896, JP 84/227,490, JP 84/227,948, JP 85/27,594, JP 85/30,391, JP 85/229,787, JP 85/229,789, JP 85/229,790, JP 85/229,791, JP 85/229,792, JP 85/229,793, JP 85/229,795, JP 86/41,596, JP 86/268,493, JP 86/268,494, JP 86/268,495, and JP 86/284,489, US 4,839,336, US 5,168,094, US 5,147,844, US 5,177,052, US 5,175,069, US 5,155,088, US 5,166,124, US 5,166,129, US 5,166,128, US 5,134,115, US 5,132,276, US 5,132,275, US 5, 132,274, US 5,132,273, US 5,132,268, US 5,132,267, US 5,126,314, US 5,126,313, US 5,126,312, US 5,126,311, US 5,134,116, US 4,975,410, US 4,885,272, US 4,886,029, etc..

The coating layer may also contain other additives, such as curing agents, preservatives, organic or inorganic fine particles, dispersing agents, antistatic agents, defoaming agents, viscosity-controlling agents, these and other ingredients have been described more fully in EP 133,011, EP 133,012, EP 111,004, and EP 279,467.

Any material can be used as the support for the dye-donor element provided it is dimensionally stable and capable of withstanding the temperatures involved, up to 400°C over a period of up to 20 msec, and is yet thin enough to transmit heat applied on one side through to the dye on the other side to effect transfer to the receiver sheet within such short periods, typically from 1 to 10 msec. Such materials include polyesters such as polyethylene terephthalate, polyamides, polyacrylates, polycarbonates, cellulose esters, fluorinated polymers, polyethers, polyacetals, polyolefins, polyimides, glassine paper and condenser paper. Preference is given to a support comprising polyethylene terephthalate. In general, the support has a thickness of 2 to 30 µm. The support may also be coated with an adhesive or subbing layer, if desired.

The dye layer of the dye-donor element may be coated on the support or printed thereon by a printing technique such as a gravure process.

A dye barrier layer comprising a hydrophilic polymer may also be employed between the support and the dye layer of the dye-donor element to enhance the dye transfer densities by preventing wrong-way transfer of dye backwards to the support. The dye barrier layer may contain any hydrophilic material that is useful for the intended purpose. In general, good results have been obtained with gelatin, polyacrylamide, polyisopropyl acrylamide, butyl methacrylate-grafted gelatin, ethyl methacrylate-grafted gelatin, ethyl acrlate-grafted gelatin, cellulose monoacetate, methylcellulose, polyvinyl alcohol, polyethyleneimine, polyacrylic acid, a mixture of polyvinyl alcohol and polyvinyl acetate, a mixture of polyvinyl alcohol and polyacrylic acid, or a mixture of cellulose monoacetate and polyacrylic acid. Suitable dye barrier layers have been described in e.g. EP 227091 and EP 228065. Certain hydrophilic polymers, e.g. those described in EP 227091, also have an adequate adhesion to the support and the dye layer, so that the need for a separate adhesive or subbing layer is avoided. These particular hydrophilic polymers used in a single layer in the dye-donor element thus perform a dual function, hence are referred to as dye-barrier/subbing layers.

Preferably the reverse side of the dye-donor element has been coated with a slipping layer to prevent the printing head from sticking to the dye-donor element. Such a slipping layer would comprise a lubricating material such as a surface active agent, a liquid lubricant, a solid lubricant or mixtures thereof, with or without a polymeric binder. The surface-active agents may be any agents known in the art such as carboxylates, sulfonates, phosphates, aliphatic amine salts, aliphatic quaternary ammonium salts, polyoxyethylene alkyl ethers, polyethylene glycol fatty acid esters, fluoroalkyl C2-C20 aliphatic acids. Examples of liquid lubricants include silicone oils, synthetic oils, saturated hydrocarbons and glycols. Examples of solid lubricants include various higher alcohols such as stearyl alcohol, fatty acids and fatty acid esters. Suitable slipping layers have been described in e.g. EP 138483, EP 227090, US 4567113, US 4572860, US 4717711. Preferably the slipping layer comprises a styrene-acrylonitrile copolymer or a styrene-acrylonitrile-butadiene copolymer or a mixture thereof or a polycarbonate as described in EP-A-527520 as binder and a polysiloxane-polyether copolymer or polytetrafluoroethylene or a mixture thereof as lubicrant in an amount of 0.1 to 10% by weight of the binder or binder mixture.

The support for the receiver sheet that is used with the dye-donor element may be a transparant film of e.g. polyethylene terephthalate, a polyether sulfone, a polyimide, a cellulose ester or a polyvinyl alcohol-co-acetal. The support may also be a reflective one such as baryta-coated paper, polyethylene-coated paper or white polyester i.e. white-pigmented polyester. Blue-coloured polyethylene terephthalate film can also be used as support.

To avoid poor adsorption of the transferred dye to the support of the receiver sheet or receiver element this support must be coated with a special surface, a dye-image-receiving layer, into which the dye can diffuse more readily. The dye-image-receiving layer may comprise, e.g. a polycarbonate, a polyurethane, a polyester, a polyamide, polyvinyl chloride, polystyrene-co-acrylonitrile, polycaprolactone or mixtures thereof.

The dye-image receiving layer may also comprise a heat-cured product of poly(vinylchloride/co-vinylacetate/co-vinylalcohol) and polyisocyanate. Suitable dye-receiving layers have been described in e.g. EP 133011, EP 133012, EP 144247, EP 227094, EP 228066.

In order to improve the light-fastness and other stabilities of recorded images, UV absorbers, singlet oxygen quenchers such as HALS-compounds (Hindered Amine Light Stabilizers) and/or antioxidants can be incorporated into the receiving layer.

The dye layer of the dye-donor element or the dye-image-receiving layer of the receiver sheet may also contain a releasing agent that aids in separating the dye-donor element from the receiving sheet after transfer. The releasing agents can also be incorporated in a separate layer on at least part of the dye layer and/or of the dye-image-receiving layer. Suitable releasing agents are solid waxes, fluorine- or phosphate-containing surface-active agents and silicone oils. Suitable releasing agents have been described in e.g. EP 133012, JP 85/19138 and EP 227092.

The dye-donor elements according to the invention are used to form a dye transfer image, which process comprises placing the dye layer of the dye-donor element in face-to-face relation with the dye-image-receiving layer of the receiver sheet or receiver element and image-wise heating preferably from the back of the dye-donor element. The transfer of the dye is accomplished by heating for about several milliseconds at a temperature of 400°C.

When the process is performed for but one single color, a monochrome dye transfer image is obtained. A multicolor image can be obtained by using a dye-donor element containing three or more primary colour dyes and sequentially performing the process steps described above for each colour. After the first dye has been transferred, the elements are peeled apart. The above sandwich of dye-donor element and receiver sheet is formed on three occasions during the time when heat is applied by the thermal printing head. After the first dye has been transferred, the elements are peeled apart. A second dye-donor element (or another area of the dye-donor element with a different dye area) is then brought in register with the dye-receiving element and the process is repeated. The third colour and optionally further colours are obtained in the same manner.

In addition to thermal heads, laser light, infrared flash or heated pens can be used as the heat source for supplying heat energy. Thermal printing heads that can be used to transfer dye from the dye-donor elements of the present invention to a receiver sheet are commercially available. In case laser light is used, the dye layer or another layer of the dye element has to contain a compound that absorbs the light emitted by the laser and converts it into heat e.g. carbon black.

Alternatively, the support of the dye-donor element may be an electrically resistive ribbon consisting of e.g. a multilayer structure of a carbon loaded polycarbonate coated with a thin aluminum film. Current is injected into the resistive ribbon by electrically adressing a printing head electrode resulting in highly localized heating of the ribbon beneath the relevant electrode. The fact that in this case the heat is generated directly in the resistive ribbon and that it is thus the ribbon that gets hot leads to an inherent advantage in printing speed using the resistive ribbon/electrode head technology compared to the thermal head technology, according to which the various elements of the thermal head get hot and must cool down before the head can move to the next printing position.

The following examples illustrate the invention in more detail without limiting, however, the scope thereof.

### Example 1

The absorption maxima ( λ max) and molecular extinction coefficients (ε) of the dyes identified below were determined in dichloromethane unless otherwise stated. The results are listed in Table 3.

**Table 3**

| Dye | λ max (nm) | ε (mol⁻¹cm⁻¹l) |
|---|---|---|
| 1.1 | 656^{a} | 54516 |
| 1.2 | 652 | 58767 |
| 1.4 | 714 | 65426 |
| 1.9 | 638 | 55447 |
| 1.11 | 692^{b} | 26076 |
| 1.12 | 630 | 52405 |
| 1.13 | 650 | 58617 |
| 1.14 | 660 | 45977 |
| 1.16 | 660 | 53711 |
| 1.17 | 692 | 61029 |
| | 672^{a} | 65152 |
| 1.18 | 674^{a} | 59553 |
| | 706 | 59126 |
| 1.19 | 714 | 69539 |
| 1.20 | 714 | 70004 |
| 1.22 | 706 | 66531 |
| 1.25 | 620^{a} | 64219 |
| 2.1 | 654 | 64383 |
| 2.2 | 714 | 69484 |
| 2.3 | 720 | 67825 |
| 2.4 | 654 | 65938 |
| 2.17 | 652 | 63253 |

| | | |
|---|---|---|
| a. in methanol | | |
| b. in CH₂Cl₂/CH₃OH : 10/90 | | |

### Example 2

Receiver sheets were prepared by coating a subbed polyethylene terephthalate film having a thickness of 175 µm with a dye-image-receiving layer from a solution in ethyl methyl ketone of 3,6 g/m² of poly(vinyl chloride/co-vinyl acetate/co-vinyl alcohol) (Vinylite™ VAGD supplied by Union Carbide), 0,336 g/m² of diisocyanate (Desmodur™ N75 supplied by Bayer AG), and 0,2 g/m² of hydroxy-modified polydimethylsiloxane (Tegomer™ H SI 2111 supplied by Goldschmidt).

Dye-donor elements for use according to thermal dye sublimation transfer were prepared as follows:

A solution or a ball-milled dispersion comprising 0.5 % by weight of dye and 0.5 % by weight of copoly(styrene-acrylonitrile) (Luran™ 388S, supplied by BASF, Germany) as binder in ethyl methyl ketone was prepared.

From this solution a dye layer having a wet thickness of 100 um was coated on a polyethylene terephthalate film support having a thickness of 6 µm and carrying a conventional subbing layer. The resulting dye layer was dried by evaporation of the solvent.

The opposite side of the film support was coated with a subbing layer of a copolyester comprising ethylene glycol, adipic acid, neopentyl glycol, terephthalic acid, isophthalic acid, and glycerol.

The resulting subbing layer was covered with a solution in methyl ethyl ketone of 0.5 g/m² of a homo-polycarbonate comprising recurring units of the following structural formula to form a heat-resistant layer :

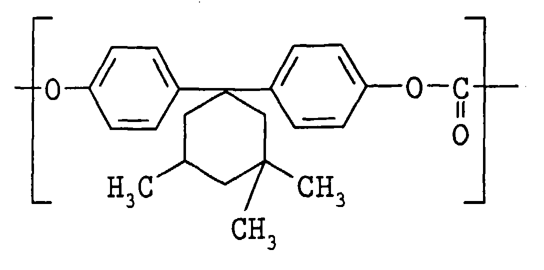

Finally, a top layer of polyether-modified polydimethylsiloxane (Tegoglide™ 410, Goldschmidt) was coated from a solution in isopropanol on the resulting heat-resistant polycarbonate layer.

The dye-donor element was printed in combination with a receiver sheet in a Mitsubishi colour video printer CP100E.

The receiver sheet was separated from the dye donor element and the colour density value of the recorded image was measured by means of a Macbeth TR 2945 densitometer in the red, green, and blue regions in Status A mode.

The above described experiment was repeated for each of the dyes identified in Table 4.

Finally, each receiver sheet was subjected to irradiation by means of xenon lamp of 150 klux for a time indicated in hours in Table 4 and the colour density values were measured again. The density change was calculated and is listed in percent in Table 4.

The chemical structure of the dyes used is listed in tables 1 and 2.

The results listed in Table 4 show that the light stabilities of the dyes, belonging to various structural classes are extremely high.

**Table 4**

| Dye | Dₘₐₓ | D | | | Density change in % after Xenon exposure for | | |
|---|---|---|---|---|---|---|---|
| | | R | G | B | 4 h | 12 h | 28 h |
| 1.1 | 171 | 150 | 58 | 47 | - 3 | - 5 | - 7 |
| 1.2 | 218 | 150 | 56 | 35 | 0 | - 1 | - 1 |
| 1.4 | 109 | 150 | 71 | 106 | - 2 | - 5 | - 5 |
| 1.9 | 161 | 150 | 89 | 47 | 0 | 0 | - 8 |
| 1.11 | 136 | 138 | 48 | 69 | - 2 | - 2 | - 6 |
| 1.12 | 231 | 150 | 62 | 30 | - 2 | - 5 | - 9 |
| 1.14 | 87 | 88 | 62 | 34 | 0 | - 9 | -18 |
| 1.17 | 153 | 150 | 56 | 49 | - 5 | - | - 6 |
| 1.18 | 132 | 140 | 49 | 79 | - 2 | - 2 | - 5 |
| 1.21 | 73 | 76 | 34 | 62 | - 4 | - 8 | -16 |
| 1.22 | 96 | 97 | 40 | 67 | + 5 | + 3 | 0 |
| 1.28 | 210 | 100 | 150 | 34 | -13 | -31 | -61 |
| 2.1 | 63 | 63 | 42 | 38 | 0 | - | - 6 |
| 2.2 | 52 | 53 | 27 | 48 | - 8 | - 8 | - 8 |
| 2.3 | 86 | 94 | 38 | 81 | 0 | 0 | 0 |
| 2.17 | 119 | 125 | 62 | 55 | - 5 | - 5 | - 3 |

### Example 3

Light stabilizing effect of the dyes according to the invention when compounded with other dyes.

Dyes of the prior art, given in Table 5, have been compounded with dyes according to the invention in order to check their light stabilising effect.

The results are given in Table 6.

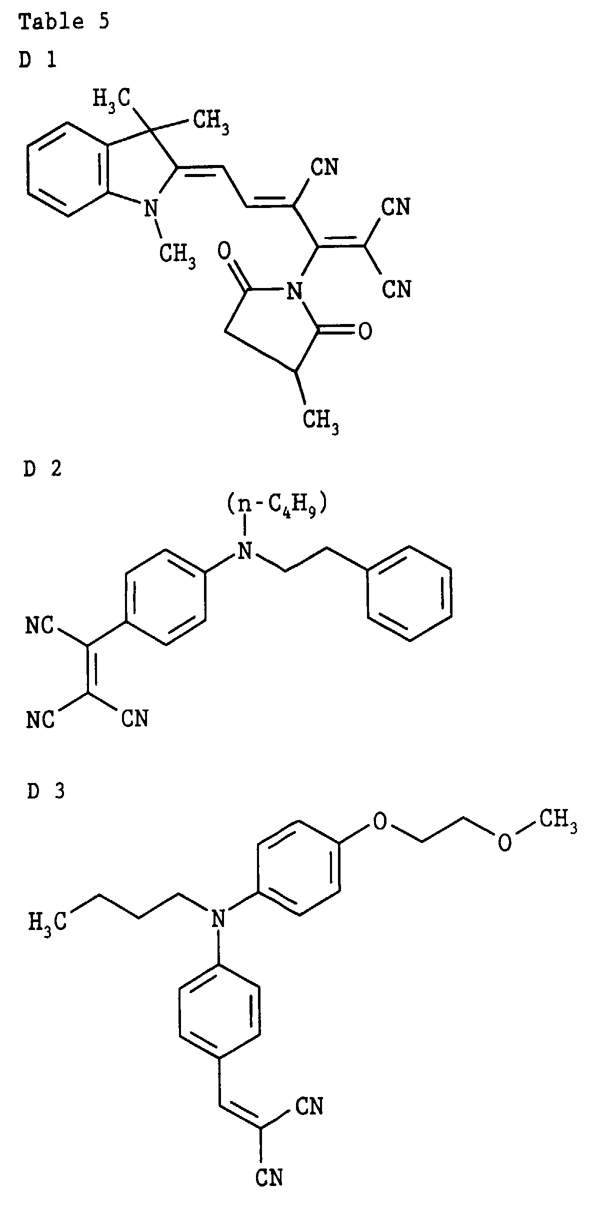

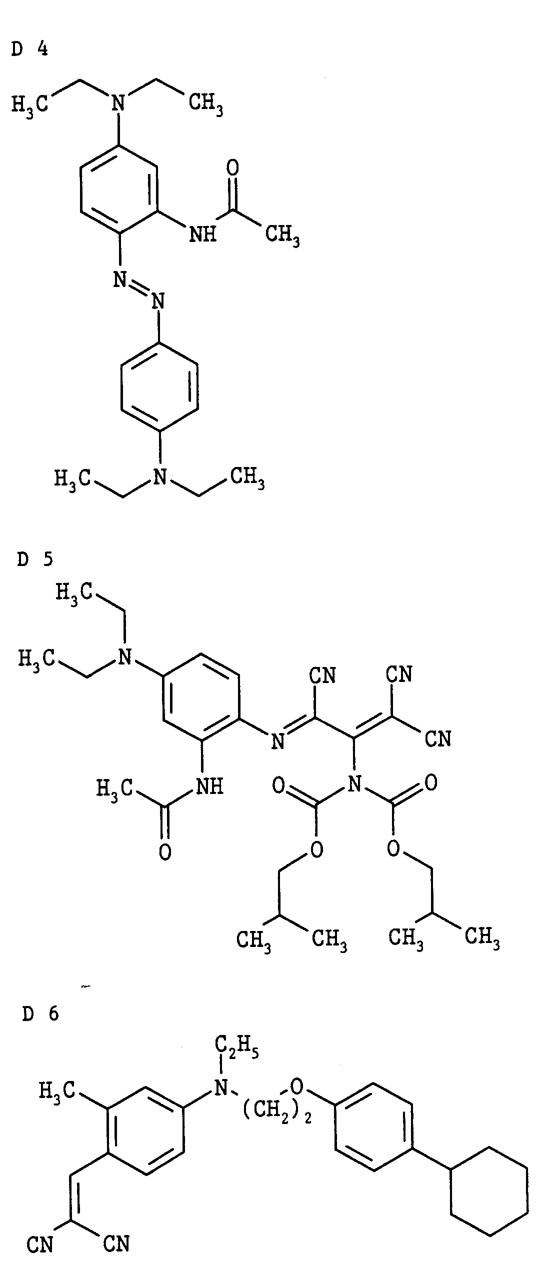

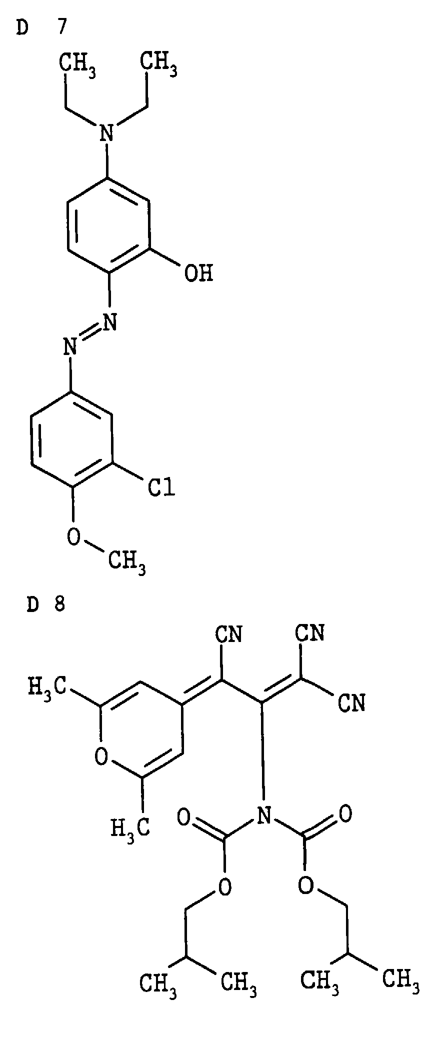

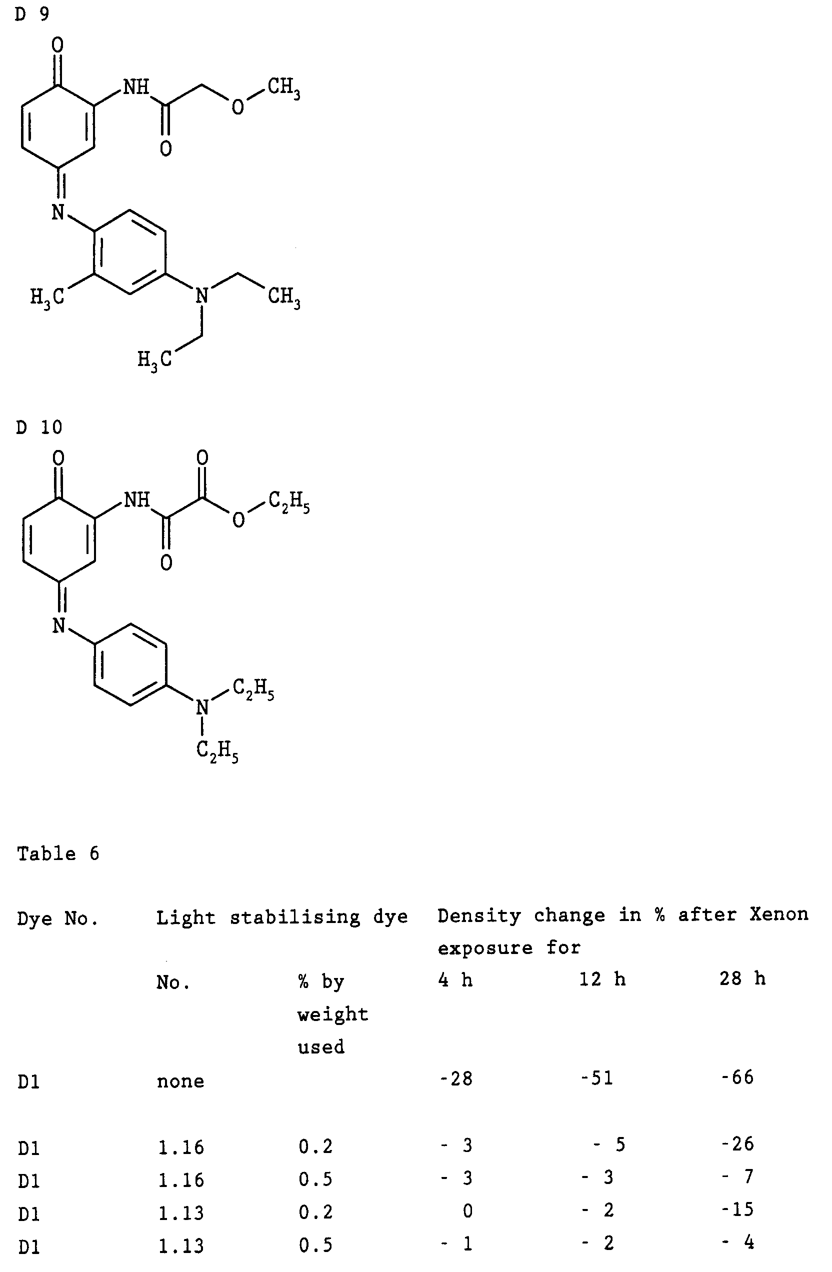

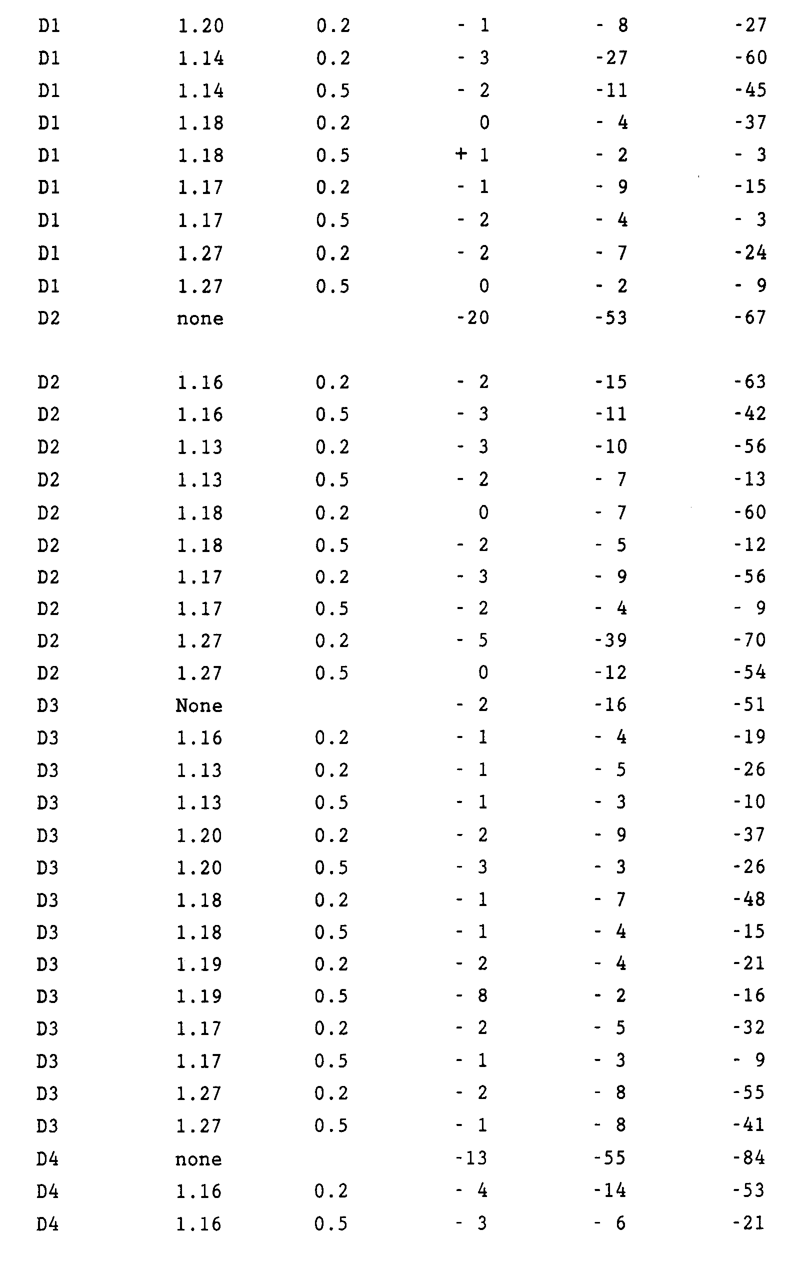

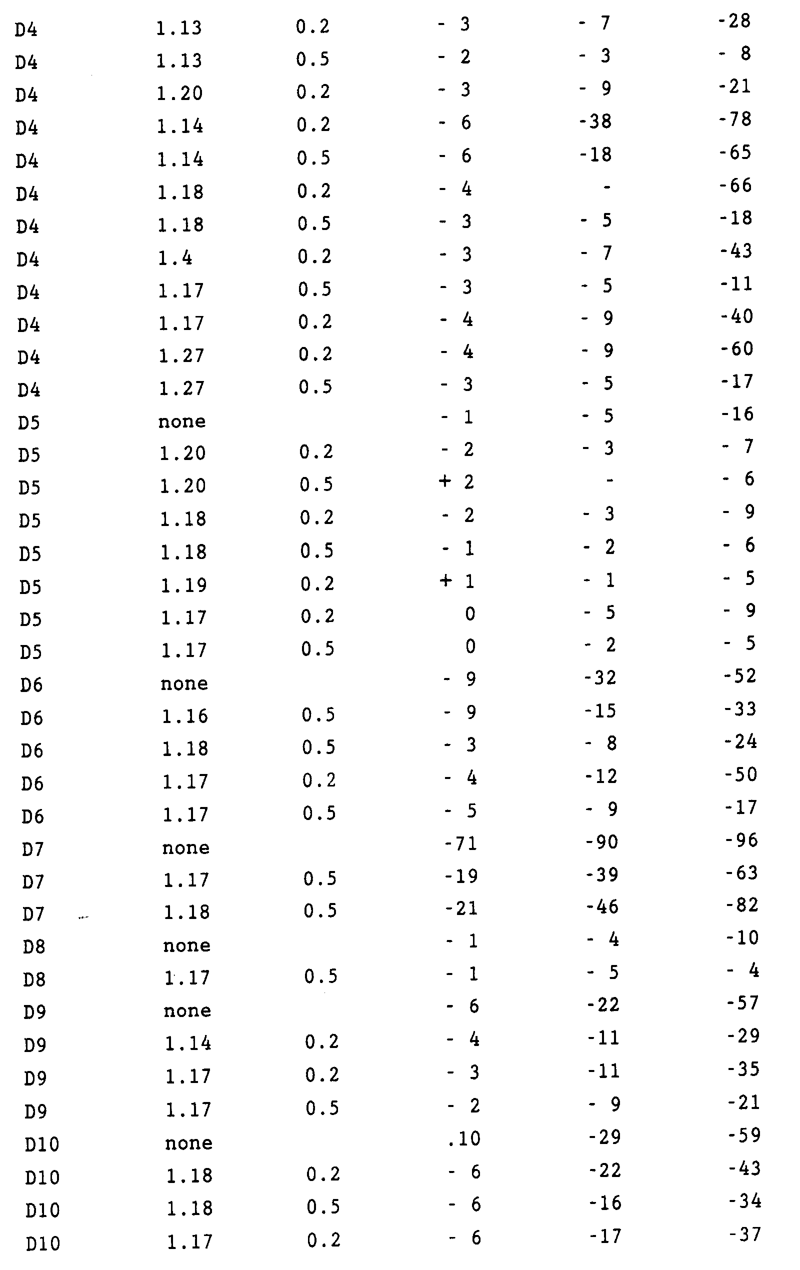

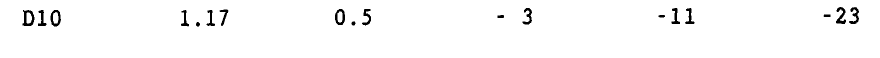

The results listed in Table 6 show that the dyes according to the present invention are efficient light stabilizers for a wide range of dyes or dye mixtures. In particular, the above example shows that the dyes according to the present invention have a stabilising effect on azo dyes, in particular bis-aryl azoaniline dyes, on azomethine dyes, on indo-aniline dyes and on styryl dyes, in particular dicyanovinyl aniline dyes.

## Claims

1. A dye donor element comprising on a support a dye layer comprising a binder and a dye corresponding to the following general formula (I): 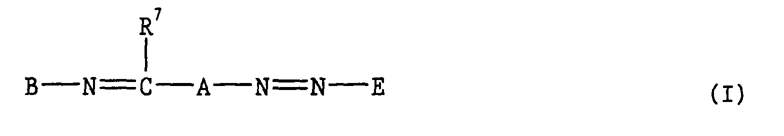 wherein :
A and B independently represent a heterocyclic ring;
E represents the residue of an aromatic coupling compound E-Q wherein Q is a group displaceable by a diazotised amine;
R⁷ represents hydrogen, an alkyl group, an alkenyl group, an alkynyl group, an aryl group, an aryloxy group, an alkoxy group, an alkylthio group, an amino group or an electron withdrawing group.

2. A dye donor element according to claim 1 wherein said aromatic coupling compound E-Q corresponds to one of the following formulas: 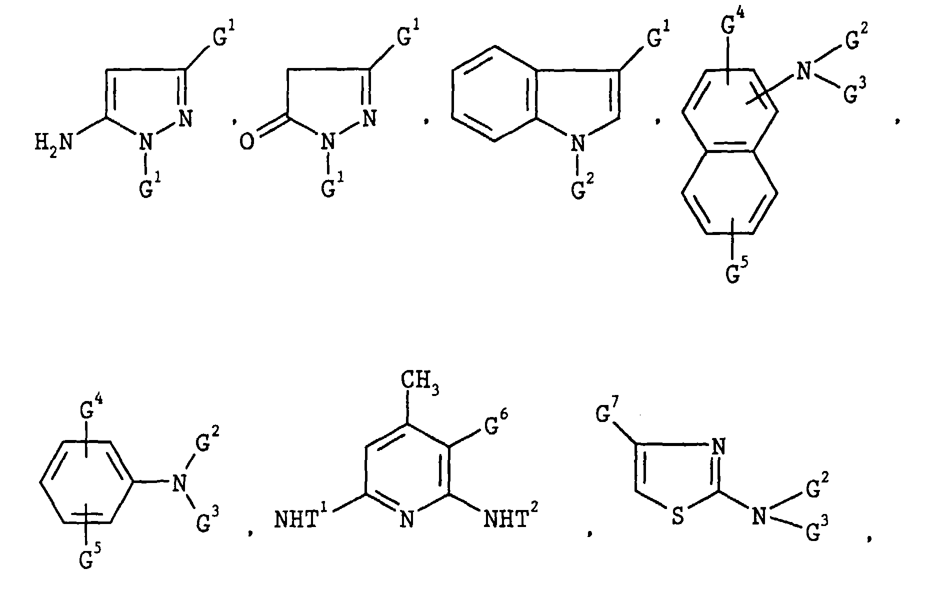 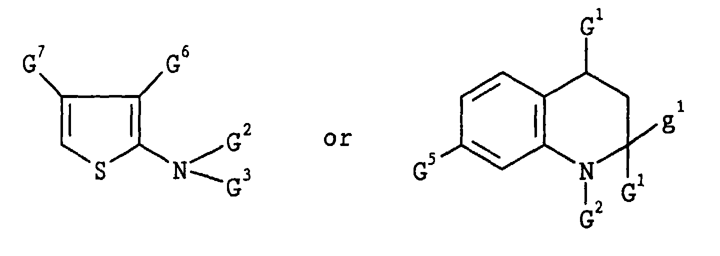 wherein :
T¹ represents hydrogen, an alkyl group, an alkynyl group, an alkenyl group, an aryl group or an acyl group;
T² represents an alkyl group, an alkynyl group, an alkenyl group, an aryl group or an acyl group;
G¹ and G² each independently represent hydrogen, an alkyl group, an alkenyl group, an alkynyl group or an aryl group;
G³ represents an alkyl group, an alkenyl group, an alkynyl group or an aryl group;
G⁴ and G⁵ each independently represent hydrogen, an alkyl group, an alkynyl group, an alkenyl group, an alkoxy group, an aryloxy group, an alkylthio group, an arylthio group, halogen, an alkylsulfonylamino group, an arylsulfonylamino group, or an acylamino group;
G⁶ represents CN, a carbamoyl group, nitro, an acetyl group, an alkoxy group, an aryloxy group, an arylthio group or an alkylthio group and
G⁷ represents an aryl group, an alkyl group, an alkenyl group, an alkynyl group, halogen, an amino group, OH, SH, an alkylthio group, an alkoxy group, an aryloxy group or an arylthio group.

3. A dye donor element according to claim 1 wherein said dye corresponds to the following general formula: 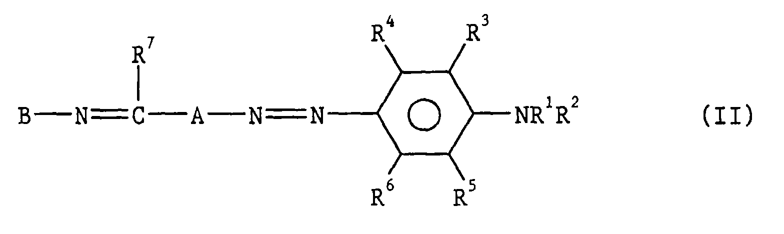 wherein A, B and R⁷ have the same meaning as defined in formula (I)of claim 1;
R¹ and R² each independently represent hydrogen, an alkyl group, an alkenyl group, alkynyl group, an aryl group, a heterocyclic group or R¹ and R² together with the nitrogen atom to which they are attached represent the atoms necessary to complete a ring;
R³, R⁴, R⁵ and R⁶ each independently represent hydrogen, an alkyl group, an alkenyl group, an alkynyl group, an aryl group, an alkoxy group, an alkylthio group, an arylthio group, an aryloxy group, a carbamoyl group, a sulfamoyl group, hydroxy, SH, an amino group, a halogen, NO₂, CN, NHSO₂R⁸, OSO₂R⁸, OCOR⁸, COR⁸, SO₂R⁸ or R⁵ and R⁶ together and/or R³ and R⁴ together with the atoms to which they are attached represent the necessary atoms to complete a ring or R⁵ and R¹ together with the atoms to which they are attached and/or R³ and R² together with the atoms to which they are attached represent the necessary atoms to form a heterocyclic ring;
R⁸ represents an alkyl group, an alkenyl group, an alkynyl group, an aryl group, an alkyloxy group, an aryloxy group, an alkylthio group, an arylthio group, an amino group or a heterocyclic group.

4. A dye donor element according to claim 1 wherein said dye corresponds to the following general formula: 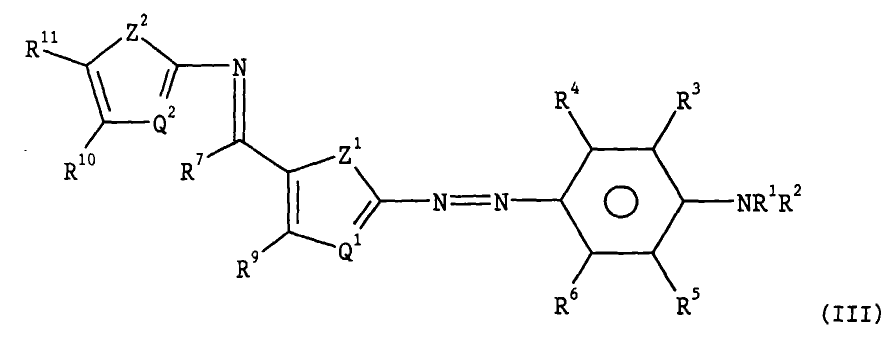 wherein R¹, R², R³, R⁴, R⁵, R⁶ and R⁷ have the same meaning as defined in formula (I);
Z¹ and Z² each independently represent O, S or NR¹² with R¹² representing hydrogen, an alkyl group, an alkenyl group, an alkynyl group or an aryl group;
Q¹ and Q² each independently represent N or CR¹³ with R¹³ representing hydrogen, an alkyl group, an alkenyl group, an alkynyl group, an aryl group, an alkoxy group, an alkylthio group, OH, CN, NO₂, SH, halogen, amino, COR¹⁴, SO₂R¹⁴, NHCOR¹⁴, NHSO₂R¹⁴, OCOR¹⁴ or OSO₂R¹⁴;
R¹⁴ represents an alkyl group, an alkenyl group, an alkynyl group, an aryl group, an alkyloxy group, an aryloxy group, an alkylthio group, an arylthio group, an amino group or a heterocyclic group;
R⁹ and R¹⁰ each independently represent hydrogen, halogen, CN, an alkyl or aryl group, an amino group, or W-R¹⁵; W represents O, S, or SO₂ and R¹⁵ represents hydrogen, an alkyl group, an aryl group, an alkenyl group, an alkynyl group or CN;
R¹¹ represents halogen, hydrogen, an alkyl group, an alkenyl group, an alkynyl group, an aryl group, an alkoxy group, an alkythio group, NO₂, CN or R¹⁶-C=X wherein R¹⁶ represents hydrogen, an alkyl group, an alkenyl group, an aryl group, an aryloxy group, an alkoxy group, an alkylthio group, an amino group or an electron withdrawing group as e.g. mentioned for R⁷;
X represents O, N-R¹⁷, CR¹⁸R¹⁹;
R¹⁷ represents H, CN, NR²⁰R²¹, OR²⁰, OCOOR²⁰, OCONR²⁰R²¹, OSO₂R²⁰, OPO(OR²⁰⁾(OR²¹) or a heterocyclic ring;
R¹⁸ and R¹⁹ each independently represents an electron withdrawing or R¹⁸ and R¹⁹ together represent the atom necessary for completing a ring system;
R²⁰ and R²¹ each independently represents hydrogen, an alkyl group, an aryl group, an alkenyl group, an alkynyl group or R²⁰ and R²¹ together represent the atoms necessary for completing a heterocyclic nucleus.

5. A dye donor element according to claim 1 wherein A and B are selected from the group consisting of a thiazole, thiophene, imidazole, benzimidazole, pyrazole, oxazole, benzoisothiazole, pyridine, thiadiazole, triazole, quinoline, isoquinoline, furan, isoxazole, benzoisoxazole, pyrrole, isothiadiazole, and benzoxazole ring.

6. A dye donor element according to any of the above claims further comprising a dye selected from the group consisting of an azo dye, an azomethine dye, an indo-aniline dye and a styryl dye.

7. A dye as defined in any of claims 1 to 5.

8. A method for making an image according to the thermal dye transfer process comprising the steps of :
- placing the dye layer of a dye donor element as defined in any of the above claims 1 to 6 in face-to-face relationship with a dye-image receiving layer of a receiving element;
- image-wise heating a thus obtained assemblage and
- separating said receiving element from said dye donor element.
